# DEMANDE DE BREVET EUROPEEN

(11) **EP 3 381 532 A1**
(43) Date de publication de la demande: **03.10.2018**
(21) Numéro de dépôt: 18164001.2
(22) Date de dépôt: 26.03.2018
(51) Int. Cl.: B01D 21/00, F04F 1/06, F16K 31/26, G05D 16/12

(54) **SYSTÈME PNEUMATIQUE POUR LE RELEVAGE D'UN LIQUIDE TEL QUE DE L'HUILE DE COUPE**

(30) Priorité: 27.03.2017 FR 1752531
(71) Demandeur: SMOW, 60510 Bresles (FR)
(72) Inventeur: NECER, Nadir, 60510 BRESLES (FR)
(74) Mandataire: Bureau Duthoit Legros Associés

(57) **Abrégé**

L'invention concerne un système pneumatique (1) pour le relevage d'un liquide tel que de l'huile, par exemple liquide de coupe ou lubrifiant d'usinage, comprenant :
- un boîtier (2) formant intérieurement au moins une chambre (20) pour la réception d'un liquide, présentant une première entrée (21) pour le liquide destiné à être relevé, une sortie (22) pour le liquide à évacuer, un orifice d'évent (23) apte à mettre en communication l'atmosphère interne du boîtier avec l'atmosphère extérieure, et une deuxième entrée (24) destinée à être connectée à une source d'air comprimé,
- une valve anti-retour (7) comprenant un obturateur (70) configuré pour autoriser le passage du fluide depuis la première entrée (21) vers la chambre (20), et interdisant la circulation de fluide en sens inverse,
- un distributeur (3), interne à la chambre du boîtier comprenant un corps (30) pour une valve pneumatique
le système pneumatique étant configuré de manière à ce que l'écoulement de fluide traversant la première entrée (21) du boitier provoque le remplissage de la chambre (20) interne avec le liquide, l'air interne au boitier étant autorisé à s'échapper du boitier par l'évent (23) dans la position basse du flotteur pour laquelle la valve du distributeur est dans une première position (P1), basse, puis la montée du flotteur provoque le passage de la valve du distributeur dans la deuxième position pour laquelle la chambre interne est mise en pression par la source d'air comprimé, provoquant le refoulement du fluide contenu dans la chambre par la sortie (22) du boîtier.

## Description

L'invention est relative à un système pneumatique pour le relevage d'un liquide tel que de l'huile d'usinage, ainsi qu'un équipement pour la récupération de copeaux d'usinage et la séparation de l'huile d'usinage comprenant un bac de récupération de copeaux, ainsi qu'un tel système pneumatique destiné à être raccordé de manière amovible à une sortie d'huile du bac.

Le domaine de l'invention est celui des équipements permettant la récupération des copeaux métalliques issus d'opérations d'usinage telles que par exemple sciage, fraisage, tournage, perçage ou autres. Dans ce domaine, les centres d'usinage engendrent la production d'une quantité importante de copeaux métalliques qui sont typiquement valorisés, à savoir revendus à des ferrailleurs.

Le prix d'achat des copeaux est toutefois réduit si les matières des copeaux sont en mélange, ou encore si les copeaux sont trop imprégnés d'huile d'usinage. Il est encore d'intérêt de pouvoir récupérer l'huile d'usinage, autant que possible, en raison du prix important de cette huile. Autrement, il devient nécessaire d'augmenter la fréquence d'ajout d'huile dans les machines d'usinage. Le fait de collecter et de réutiliser ces huiles présente aussi un enjeu environnemental.

Un premier objectif de l'invention est de proposer un système pneumatique pour le relevage d'un liquide qui trouvera une application particulière pour évacuer l'huile d'usinage récupérée des copeaux, limitant avantageusement les risques d'inflammation de l'huile, et par comparaison à un système de pompe électrique.

Un système pneumatique est encore avantageux (par comparaison à une pompe électrique) en ce qu'il s'agit d'une solution universelle permettant de s'affranchir des différentes normes d'alimentation (en tension) typiquement utilisées dans les centres d'usinage (par exemple 200 volts triphasé, 400 volts triphasé), et alors que ces centres disposent déjà d'une source d'air comprimé pour le fonctionnement des machines d'usinage

Un autre but de la présente invention est de proposer un équipement comprenant un bac de récupération de copeaux, ainsi qu'un tel système pneumatique destiné à être raccordé de manière amovible à une sortie d'huile du bac qui réponde à la problématique ci-dessus exposée, permettant la collecte aisée des copeaux, et la séparation de l'huile de coupe.

Un autre but de la présente invention est de proposer un tel équipement dont le bac de récupération peut être facilement manipulé et renversé par des engins de levage typiquement présents dans un atelier d'usinage.

D'autres buts et avantages apparaîtront au cours de la description qui va suivre qui n'est donnée qu'à titre indicatif et qui n'a pas pour but de la limiter.

Aussi l'invention concerne tout d'abord un système pneumatique pour le relevage d'un liquide tel que de l'huile, comprenant :
- un boîtier formant intérieurement au moins une chambre pour la réception d'un liquide, présentant une première entrée pour le liquide destiné à être relevé, une sortie pour le liquide à évacuer, un orifice d'évent apte à mettre en communication l'atmosphère interne du boîtier avec l'atmosphère extérieure, et une deuxième entrée destinée à être connectée à une source d'air comprimé,
- une valve anti-retour comprenant un obturateur configuré pour autoriser le passage du fluide depuis la première entrée vers la chambre, et interdisant la circulation de fluide en sens inverse,
- un distributeur, interne à la chambre du boîtier comprenant un corps pour une valve pneumatique présentant :
- une première entrée connectée par l'intermédiaire d'une première conduite à la deuxième entrée du boîtier destinée à être connectée à la source d'air comprimé et
- une deuxième entrée connectée par l'intermédiaire d'une deuxième conduite à l'orifice d'évent,
- une sortie,
un organe mobile de la valve du distributeur étant configurée pour prendre au moins :
- une première position dans laquelle la deuxième entrée du distributeur est mise en communication avec la sortie du distributeur pour assurer la mise en communication de l'atmosphère de la chambre interne avec l'atmosphère externe au boitier, la valve interdisant le passage de l'air comprimé depuis la première entrée vers la sortie de valve,
- une deuxième position dans laquelle la première entrée du distributeur est mise en communication avec la sortie du distributeur pour assurer la mise en pression de la chambre interne avec la source d'air comprimé, la valve interdisant le passage de l'air depuis la sortie du distributeur vers la deuxième entrée du distributeur,
ledit distributeur comprenant un levier de commande, articulé à son extrémité proximale au corps du distributeur et à son extrémité distale à un flotteur apte à s'élever ou descendre suivant le niveau du fluide dans la chambre, ledit flotteur passant successivement d'une position basse dans laquelle le levier de commande actionne l'organe mobile de la valve
dans la première position vers une position haute dans laquelle le levier de commande actionne l'organe mobile de la valve dans la deuxième position,
le système pneumatique étant configuré de manière à ce que l'écoulement de fluide traversant la première entrée du boitier provoque le remplissage de la chambre interne avec le liquide, l'air interne au boîtier étant autorisé à s'échapper du boitier par l'évent dans la position basse du flotteur pour laquelle la valve du distributeur est dans ladite première position, puis la montée du flotteur provoque le passage de la valve du distributeur dans la deuxième position pour laquelle la chambre interne est mise en pression par la source d'air comprimé, provoquant le refoulement du fluide contenu dans la chambre par la sortie du boîtier.

Selon un mode de réalisation de l'invention, une cloison interne divise la chambre interne sur la partie inférieure au boitier en :
- un premier compartiment dans lequel débouche la première entrée et,
- un deuxième compartiment à l'intérieur duquel est disposé le flotteur, la sortie pour le liquide à évacuer communiquant en partie basse du deuxième compartiment, ledit flotteur étant configuré pour suivre la montée ou la descente du niveau de liquide dans le deuxième compartiment,
ledit système pneumatique étant configuré pour que le liquide s'écoulant depuis la première entrée ayant traversé la valve anti-retour soit acheminé dans le premier compartiment, une surverse de la cloison, ou alternativement une conduite de siphonage traversant la cloison étant configurée de manière à maintenir un niveau de liquide dans le premier compartiment supérieur au niveau de la valve anti-retour en maintenant ladite valve anti-retour immergée, tout en permettant l'écoulement du liquide à partir du premier compartiment vers le deuxième compartiment.

Selon un mode de réalisation, la conduite de siphonage comprend une extrémité proximale débouchant dans le premier compartiment au-dessous du niveau du bord supérieur de la cloison et au-dessus de la valve anti-retour et une extrémité distale débouchant dans le deuxième compartiment au-dessous de l'extrémité proximale, ladite conduite de siphonage étant configurée de manière à ce qu'une fois que le niveau du liquide dans le premier compartiment passe un point haut de la conduite, ladite conduite de siphonage provoque automatiquement l'aspiration du liquide contenu dans le premier compartiment entre l'extrémité proximale et le point haut et l'acheminement du liquide aspiré dans le deuxième compartiment.

Selon un mode de réalisation, le passage de la première position de l'organe mobile de la valve vers la deuxième position nécessitant une course intermédiaire du flotteur et du levier de commande associé entre la position basse du flotteur et la position haute du flotteur, course intermédiaire pour laquelle la valve interdit toute communication de fluide entre la première entrée et la sortie du distributeur, d'une part, et entre la deuxième entrée et la sortie du distributeur, d'autre part, et dans lequel l'orifice d'évent étant dit premier évent, le boîtier du système présente un deuxième évent, indépendant, ainsi qu'un système de soupape, ledit système de soupape comprenant un obturateur telle qu'une membrane liée mécaniquement au flotteur et configuré pour assurer la mise en communication de l'atmosphère de la chambre interne au boîtier avec l'atmosphère externe au boîtier sur la course intermédiaire du flotteur en libérant le deuxième évent, et assurer la fermeture du deuxième évent lorsque le flotteur atteint ou dépasse la position haute du flotteur pour laquelle le levier de commande actionne la valve du distributeur dans la deuxième position assurant la mise en pression de la chambre interne avec la source d'air comprimé.

L'invention concerne encore un équipement pour la récupération de copeaux d'usinage et la séparation de l'huile d'usinage, comprenant :
- un bac de récupération de copeaux, amovible, comprenant quatre parois latérales et une paroi de fond définissant un volume de stockage des copeaux, définissant une ouverture supérieure de chargement/déchargement pour les copeaux, la paroi de fond étant pourvue d'un système de séparation perméable à l'huile, et destinée à retenir les copeaux, suivi d'une vanne d'ouverture/fermeture,
- un système pneumatique pour le relevage d'un liquide conforme à l'invention dont la première entrée pour le liquide est destinée à être raccordée à la vanne d'ouverture/fermeture du bac de récupération,
- un raccord souple configuré pour raccorder de manière amovible la vanne d'ouverture/fermeture du bac de récupération de copeaux à la première entrée pour le fluide à relever du système pneumatique.

Selon des caractéristiques optionnelles de l'invention, prises seules ou en combinaison :
- le système de séparation comprend une plaque amovible, partiellement grillagée ou perforée de la paroi de fond, ainsi qu'un plan incliné pour l'huile ayant traversé la plaque en sur-profondeur de la paroi de fond, présentant des chicanes saillantes du plan incliné, espacées suivant la direction de la pente du plan incliné de manière transversale à la pente;
- le bac de récupération comprend une paire de fourreaux, ou deux paires de fourreaux sensiblement perpendiculaires, autorisant chacune l'insertion des deux branches d'une fourche d'un engin de levage respectivement dans les deux fourreaux de la paire, permettant le levage et le retournement du bac ;
- la vanne d'ouverture/fermeture est logée dans une cavité d'une paroi latérale du bac ;
- les quatre coins supérieurs du bac de récupération comprennent quatre systèmes de cornières autorisant l'empilement en superposition d'un bac de récupération identique par appui des quatre coins inférieurs du bac sur les quatre systèmes de cornières du bac de récupération,
- des anneaux aux quatre coins du bac, notamment intégrés aux quatre systèmes de cornières peuvent permettre le levage du bac par élingage, par exemple en utilisant un pont roulant.

L'invention concerne encore l'utilisation de l'équipement conforme à l'invention pour la collecte des copeaux souillés d'huile d'usinage ou autre liquide de coupe, dans le bac de récupération de l'équipement, la séparation de l'huile, et l'évacuation de l'huile séparée par le bac de récupération par la mise en oeuvre de l'effet de chasse du système pneumatique de l'équipement déclenché automatiquement par la montée du flotteur du système pneumatique.

L'invention sera mieux comprise à la lecture de la description suivante accompagnée des figures en annexe parmi lesquelles :

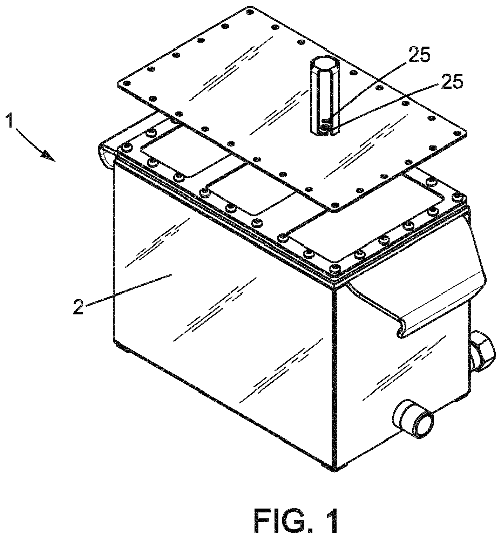

- La figure 1 est une vue en perspective d'un système pneumatique pour le relevage de liquide conforme à l'invention,
- La figure 2 est une vue de coupe selon un plan vertical, perpendiculaire à l'axe longitudinal du boîtier du système de la figure 1, et selon un premier mode de réalisation, illustrant particulièrement le flotteur dans une position basse pour laquelle la valve du distributeur est actionnée par le levier de commande dans la première position de la valve où cette dernière met en communication l'atmosphère interne au boitier avec l'atmosphère extérieure, et afin de permettre le remplissage du boitier avec le liquide,
- La figure 2a est une vue de coupe selon un plan vertical, parallèle à l'axe longitudinal du boitier du système de la figure 1, illustrant particulièrement le flotteur dans ladite position basse, ainsi que deux compartiments successifs, internes au boîtier.
- La figure 3 est une vue selon la figure 2 lorsque le flotteur est dans une position haute pour laquelle la valve du distributeur est actionnée par le levier de commande dans la deuxième position de la valve où cette dernière assure la mise en pression de la chambre interne au boîtier, à partir de la source d'air comprimée,
- La figure 3a est une vue de coupe selon un plan vertical, parallèle à l'axe longitudinal du boitier du système de la figure 3, illustrant particulièrement le flotteur dans ladite position haute, ainsi que deux compartiments successifs, internes au boîtier,
- La figure 4 est une vue de coupe, selon un plan vertical, parallèle à l'axe longitudinal du boîtier du système de la figure 1, et selon un deuxième mode de réalisation de la figure 1 qui se distingue de celui de la figure 2a par la présence d'une conduite de siphonage traversant une cloison interne et autorisant l'acheminement du liquide contenu dans le premier compartiment vers le deuxième compartiment,
- Les figures 5a à 5c sont différentes vues successives illustrant le fonctionnement de la conduite de siphonage pour permettre l'écoulement du liquide depuis le premier compartiment vers le deuxième compartiment,

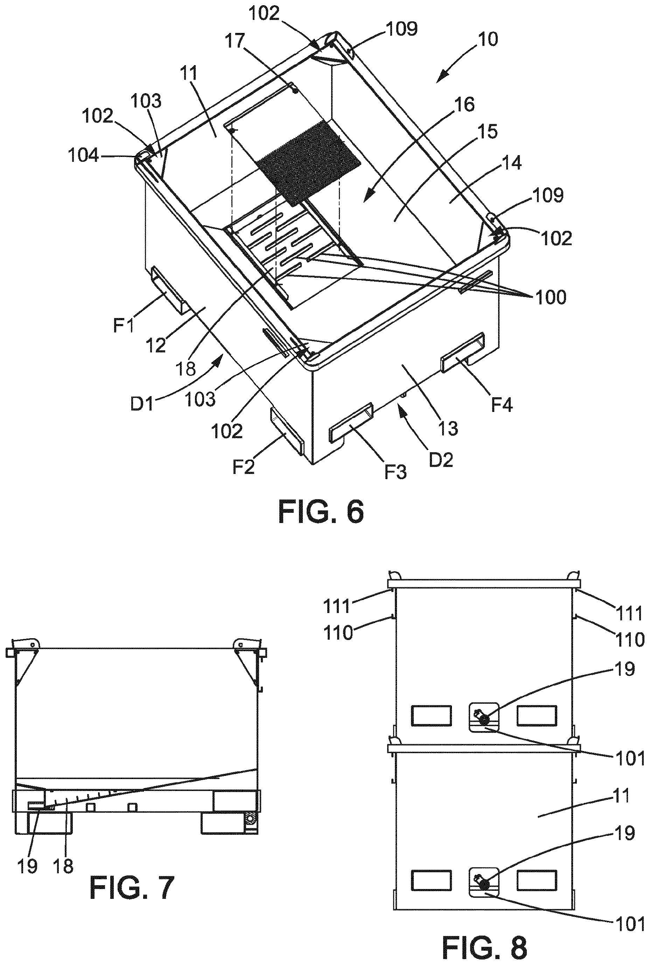

- La figure 6 est une vue en perspective d'un bac de récupération de copeaux d'un équipement conforme à l'invention,
- La figure 7 est une vue de coupe, selon un plan vertical, illustrant le système de séparation entre les copeaux et l'huile agencé en fond de bac,
- La figure 8 est une vue d'un empilement en superposition de deux bacs de récupération identiques.

Aussi l'invention concerne tout d'abord un système pneumatique 1 pour le relevage d'un liquide tel que de l'huile, notamment huile d'usinage ou autre liquide de coupe, comprenant :
- un boîtier 2 formant intérieurement au moins une chambre 20 pour la réception d'un liquide, présentant une première entrée 21 pour le liquide destiné à être relevé, une sortie 22 pour le liquide à évacuer, un orifice d'évent 23 apte à mettre en communication l'atmosphère interne du boîtier avec l'atmosphère extérieure, et une deuxième entrée 24 destinée à être connectée à une source d'air comprimé,
- une valve anti-retour 7 comprenant un obturateur 70 configurée pour autoriser le passage du liquide depuis la première entrée 21 vers la chambre 20, et interdisant la circulation de fluide en sens inverse,
- un distributeur 3, interne à la chambre du boîtier comprenant un corps 30 pour une valve pneumatique présentant :
- une première entrée 31 connectée par l'intermédiaire d'une première conduite 4 à la deuxième entrée 24 du boîtier destinée à être connectée à la source d'air comprimé et
- une deuxième entrée 32 connectée par l'intermédiaire d'une deuxième conduite 5 à l'orifice d'évent 23,
- une sortie 33, typiquement pourvue d'un silencieux.

Selon l'invention, l'organe mobile de la valve du distributeur est configuré pour prendre au moins :
- une première position P1 dans laquelle la deuxième entrée 32 du distributeur est mise en communication avec la sortie 33 du distributeur pour assurer la mise en communication de l'atmosphère de la chambre interne au boîtier avec l'atmosphère externe au boitier 2, la valve interdisant le passage de l'air comprimé depuis la première entrée 31 vers la sortie 33,
- une deuxième position P2 dans laquelle la première entrée 31 du distributeur est mise en communication avec la sortie 33 du distributeur pour assurer la mise en pression de la chambre interne avec la source d'air comprimé, la valve interdisant le passage de l'air depuis la sortie de valve vers la deuxième entrée 32.

Selon l'invention, ledit distributeur 3 comprend un levier de commande 34, articulé à son extrémité proximale au corps 30 du distributeur et à son extrémité distale à un flotteur 6 apte à s'élever ou descendre suivant le niveau du fluide dans la chambre 20 interne au boîtier.

Ce flotteur 6 passe successivement d'une position basse dans laquelle le levier de commande 34 actionne l'organe mobile de la valve dans la première position P1 vers une position haute dans laquelle le levier de commande 34 actionne l'organe mobile de la valve dans la deuxième position P2.

Selon l'invention, le système pneumatique est ainsi configuré de manière à ce que l'écoulement de fluide traversant la première entrée 21 du boîtier provoque le remplissage de la chambre 20 interne avec le liquide, l'air interne au boitier étant autorisé à s'échapper du boîtier par l'évent 23 dans la position basse du flotteur pour laquelle la valve du distributeur est dans ladite première position P1, puis la montée du flotteur 6 lors du remplissage provoque automatiquement le passage de la valve du distributeur dans la deuxième position P2 pour laquelle la chambre interne est mise en pression par la source d'air comprimé, provoquant le refoulement du fluide contenu dans la chambre par la sortie 22 du boîtier.

Lors de la phase de remplissage, le liquide s'écoule à travers la première entrée 21, traversant la valve anti-retour 7, et jusqu'à atteindre la chambre 20 interne au boîtier, l'air interne à la chambre du boîtier étant autorisé à l'échapper, dans ladite première position P1 de la valve, en circulant depuis la chambre interne 20 au travers de la sortie du distributeur 33 jusqu'à la deuxième entrée 32 du distributeur, le long de la conduite 5 et jusqu'à l'évent 23.

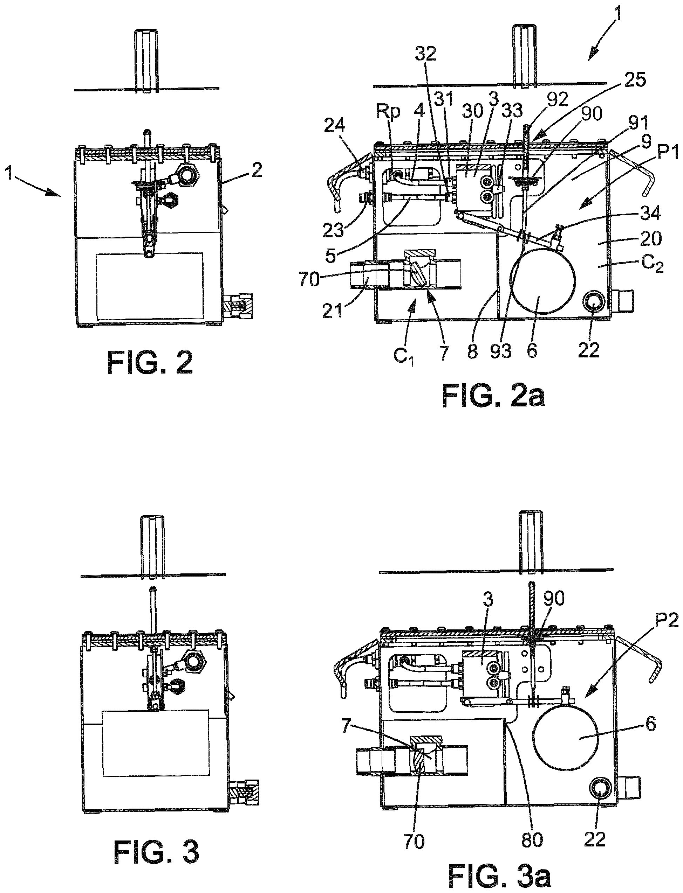

L'évacuation du liquide est automatique, déclenchée par la montée du flotteur qui provoque le passage de la valve du distributeur dans sa deuxième position P2, mettant en pression la chambre interne au boîtier à partir de la source d'air comprimé et obturant la mise à l'évent. L'effet de chasse est obtenu par la pression de l'air interne au boîtier, sur le plan du liquide, qui pousse le liquide contenu dans la chambre au travers de la sortie 22, l'obturateur 70 de la valve anti-retour 7 alors plaqué sur son siège afin d'interdire le refoulement de liquide par la première entrée 21 (voir figure 3 et 3a). A cet effet, une pression d'air comprimé de 2 bars peut être suffisante.

Le distributeur 3, en particulier le corps 30 de valve avec ses entrées 31,32 et sa sortie 33 est de préférence situé dans la chambre interne 20, au-dessus du niveau de liquide maximal dans cette chambre interne.

Le boîtier 2 peut, à titre d'exemple non limitatif, être de forme sensiblement parallélépipédique, et présenter une paroi de fond, des parois latérales notamment au nombre de quatre, et un couvercle dont les parois internes définissent la chambre 20 interne au boîtier.

La première entrée 21 pour le fluide à relever peut être constituée par une conduite rigide traversant de manière étanche une paroi latérale du boîtier : la valve anti-retour 7 peut à titre d'exemple non limitatif être interne au boîtier. Elle peut être reliée rigidement à l'extrémité de la conduite débouchant à l'intérieur de la chambre interne.

Selon un mode de réalisation, une cloison interne 8 divise la chambre 20 interne sur la partie inférieure au boîtier 2 en :
- un premier compartiment C1 dans lequel débouche la première entrée 21 et,
- un deuxième compartiment C2 à l'intérieur duquel est agencé le flotteur 6, la sortie 22 pour le liquide à évacuer communiquant en partie basse du deuxième compartiment C2.

Cette cloison 8 s'étend de préférence seulement sur la partie inférieure de la chambre interne destinée à être immergée par le liquide lors du remplissage, la partie supérieure non immergée permettant de recevoir le corps 30 du distributeur, voire un régulateur de pression Rp en amont agencé entre la deuxième entrée 32 du distributeur et la source d'air comprimée. Ce régulateur Rp limite la pression arrivant dans la chambre, par exemple à une pression limite comprise entre 1,5 et 3 bars : ce régulateur permet d'ajuster la pression de chasse à la viscosité du liquide à évacuer. On règle cette pression pour autoriser une évacuation franche, mais avantageusement sans projection intempestive.

Selon un mode de réalisation, cette cloison 8 s'étend entre deux parois latérales opposées du boîtier de forme parallélépipédique, à partir de la paroi de fond, et sur la partie inférieure du boitier.

Selon ce mode de réalisation (à deux compartiments C1, C2 successifs):
- ledit flotteur 6 est configuré pour suivre la montée ou la descente du niveau de liquide dans le deuxième compartiment C2 seulement, (et non le niveau de liquide dans le premier compartiment C1),
- le système pneumatique est configuré pour que le liquide s'écoulant depuis la première entrée 21 ayant traversé la valve anti-retour 7 soit acheminé tout d'abord dans le premier compartiment C1, avant d'arriver au second compartiment C2.

Avantageusement, une surverse 80 de la cloison 8 (ou alternativement une conduite de siphonage 81 traversant la paroi de la cloison 8) est configurée de manière à maintenir un niveau de liquide dans le premier compartiment C1, supérieur au niveau de la valve anti-retour 7 : on maintient avantageusement ladite valve anti-retour 7 immergée ce qui permet d'obtenir une meilleure étanchéité de la valve anti-retour 7 lors de la mise en pression de la chambre interne.

L'écoulement du liquide à partir du premier compartiment C1 vers le deuxième compartiment C2 s'effectue par débordement au-dessus de la surverse constituée par le bord supérieur de la cloison 8.

Alternativement l'écoulement du liquide du premier compartiment C1 vers le deuxième compartiment C2 peut être obtenu par le travail de la conduite de siphonage 81. Cette conduite de siphonage 81 comprend une extrémité proximale 82 débouchant dans le premier compartiment C1 au-dessous du niveau du bord supérieur de la cloison 8 (et au-dessus de la valve anti-retour) et une extrémité distale 83, débouchant dans le deuxième compartiment C2 au-dessous de l'extrémité proximale 82. Cette conduite comprend encore un point haut 84 entre ses deux extrémités respectivement proximale 82 et distale 83.

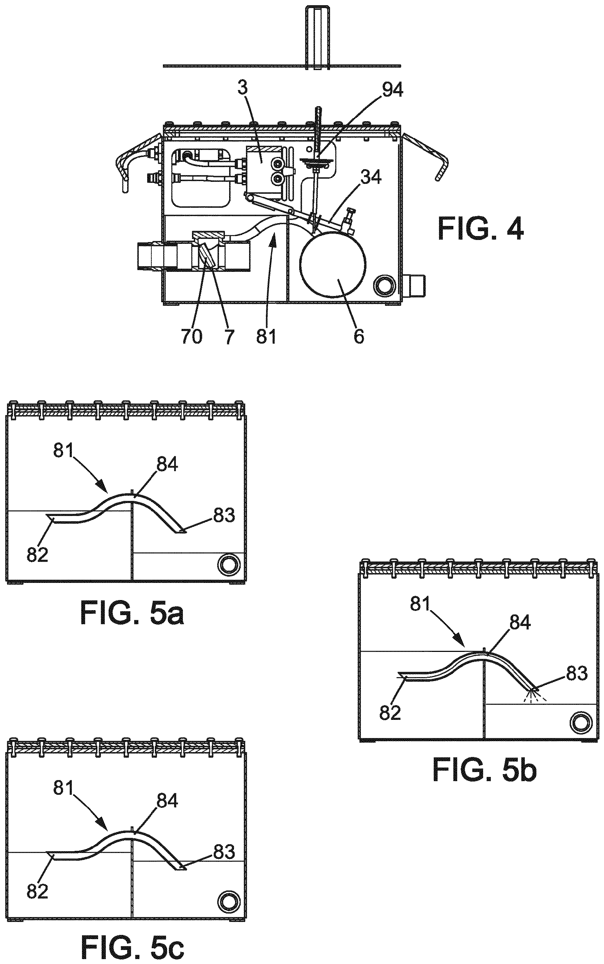

Son fonctionnement est illustré des figures 5a à 5c. Au fur et à mesure que le liquide s'écoule depuis la première entrée 21, le niveau de liquide monte dans le premier compartiment C1, et tel qu'illustré à la figure 5a.

Lorsque le niveau dans le premier compartiment C1 atteint le point haut 84 de la conduite de siphonage 81, le liquide s'écoule par gravité jusqu'à l'extrémité distale 83, remplissant le deuxième compartiment C2 (figure 5b). Le niveau de l'extrémité distale 83 dans le deuxième compartiment C2 étant inférieur à l'extrémité proximale 82 la conduite permet d'aspirer le liquide du premier compartiment C1 et de le transférer jusqu'au deuxième compartiment C2 tant que le niveau de liquide dans le premier compartiment C1 ne descend pas jusqu'au niveau de l'extrémité proximale 82 de la conduite 81 (ou que les niveaux s'équilibrent entre les compartiments C1 et C2).

Ainsi ladite conduite de siphonage 81 est avantageusement configurée de manière à ce qu'une fois que le niveau du liquide dans le premier compartiment C1 passe le point haut 84 de la conduite 81 de siphonage, ladite conduite de siphonage 81 provoque automatiquement l'aspiration du liquide contenu dans le premier compartiment C1 entre l'extrémité proximale 82 et le point haut 84 et l'acheminement du liquide aspiré dans le deuxième compartiment C2.

Selon un mode de réalisation, le passage de la première position P1 de l'organe mobile de la valve vers la deuxième position P2 peut nécessiter une course intermédiaire du flotteur 6 et du levier de commande 34 associé, entre la position basse du flotteur (commandant la première position P1 de valve) et la position haute du flotteur (commandant la deuxième position P2 de valve). Lors de cette course intermédiaire, la valve du distributeur 3 interdit toute communication de fluide entre la première entrée 31 et la sortie 33 du distributeur, d'une part, et entre la deuxième entrée 32 et la sortie 33 du distributeur, d'autre part. Le distributeur obturant la mise à l'évent 23, le liquide peut être empêché de remplir la chambre interne.

Afin de pallier cette contrariété, et avantageusement, le boîtier du système peut présenter un deuxième évent 25, indépendant, ainsi qu'un système de soupape 9, ledit système de soupape 9 comprenant un obturateur 90, telle qu'une membrane liée, mécaniquement au flotteur 6 et configuré pour assurer :
- la mise en communication de l'atmosphère de la chambre interne au boîtier avec l'atmosphère externe au boîtier 2 sur la course intermédiaire du flotteur 6, par l'ouverture du deuxième évent 25,
- la fermeture du deuxième évent 25 lorsque le flotteur 6 atteint ou dépasse la position haute du flotteur pour laquelle le levier de commande 34 actionne la valve du distributeur 3 dans la deuxième position P2 assurant la mise en pression de la chambre interne avec la source d'air comprimé.

La structure du système de soupape peut à titre d'exemple, comprendre une tige 91 dont l'extrémité basse 93 est commandée par le levier de commande 34 et dont l'extrémité haute 92 est guidée en coulissement sur le couvercle du boitier, traversant un orifice de guidage du couvercle. La liaison mécanique entre l'extrémité basse 93 et la tige est une liaison non rigide, articulée autorisant un pivotement entre la tige et le levier lors de la montée du flotteur. L'extrémité basse 93 de la tige 91 peut comprendre un trou oblong traversé par le levier de commande.

L'obturateur 90 est solidarisé à la tige 91 dans une position intermédiaire entre son extrémité haute 92 et son extrémité basse 93, à l'intérieur de la chambre interne 20. Tant que la position du flotteur est inférieure à la position haute dudit flotteur, l'obturateur libère le deuxième évent 25, autorisant l'air à s'échapper sur ladite course intermédiaire : on s'assure ainsi que le liquide remplisse la chambre jusqu'à la position haute du flotteur en permettant à l'air chassé par le liquide de s'échapper par l'évent 25, et de manière à assurer le déclenchement de la mise en pression de la chambre ainsi que l'évacuation du liquide par la sortie 22.

La position de l'obturateur 90 le long de la tige 91 peut avantageusement être réglée, et afin de pouvoir ajuster le moment où l'obturateur ferme le deuxième évent 25 lors de la montée du flotteur 6. A cet effet, la tige 91 peut comporter une section de longueur filetée coopérant par vissage avec une partie de couplage de l'obturateur 90. Le visage de la partie de couplage 94 dans un sens permet de monter la position de l'obturateur 90, et afin de déclencher plus rapidement la fermeture du deuxième évent 25. Le visage de l'obturateur 90 dans l'autre sens permet au contraire de retarder la fermeture du deuxième évent 25. Un contre-écrou (ou l'utilisation d'écrous auto-freinés) permet le blocage de la position de l'obturateur 90 le long de la tige.

Suite à la mise en pression de la chambre 20, le liquide est chassé vers la sortie 22, le flotteur étant autorisé à suivre le mouvement de descente du liquide dans le deuxième compartiment C2. Il peut toutefois arriver que la différence de pression entre la chambre interne (en surpression) et l'atmosphère extérieure s'oppose au décollement de l'obturateur 90 de la paroi, interdisant le passage du distributeur de la deuxième position P2 vers la première position P1.

De manière notable, et afin de pallier cette contrariété, le trou oblong à l'extrémité inférieure 93 de la tige 91 peut être avantageusement configuré de sorte à créer un jeu entre la tige 91 et le levier de commande 34. Ce jeu permet au flotteur 6 et au levier de commande 34 d'amorcer leur descente, et alors que l'obturateur 90 reste plaqué contre le deuxième évent 25. Lors de la descente, la course du flotteur 6 autorisée par ce jeu permet au levier de commande d'actionner le distributeur de la deuxième position P2 vers la première position P1, permettant la dépressurisation de la chambre interne 20, et ainsi le décollement de l'obturateur 90 de la paroi du deuxième évent 25.

L'invention concerne encore un équipement pour la récupération de copeaux d'usinage et la séparation de l'huile d'usinage, comprenant :
- un bac de récupération de copeaux 10, amovible, comprenant quatre parois latérales 11,12,13,14 et une paroi de fond 15 définissant un volume de stockage des copeaux, définissant une ouverture supérieure de chargement/déchargement pour les copeaux, la paroi de fond 15 étant pourvue d'un système de séparation 16 perméable à l'huile, et destinée à retenir les copeaux, suivi d'une vanne d'ouverture/fermeture 19, telle que par exemple une vanne quart de tour,
- un système pneumatique 1 pour le relevage d'un liquide conforme à l'invention dont la première entrée 21 pour le liquide est destinée à être raccordée à la vanne d'ouverture/fermeture du bac de récupération,
- un raccord de préférence souple configuré pour raccorder de manière amovible la vanne d'ouverture/fermeture 19 du bac de récupération de copeaux à la première entrée 21 pour le fluide à relever du système pneumatique 1.

Un tel équipement trouve ainsi une application particulière pour la collecte de copeaux souillés d'huile d'usinage (ou autre liquide de coupe) qui sont chargés par l'ouverture supérieure du bac 10. Le système de séparation 16 intégré au bac permet avantageusement de retenir les copeaux dans le volume de chargement du bac, l'huile traverse le système pour être évacuée par gravité jusqu'à la vanne 19 d'ouverture/fermeture.

Lorsque cette vanne 19 est raccordée à la première entrée 21 du système pneumatique 1, la valve est actionnée manuellement à l'ouverture : l'huile collectée par le bac 10 est évacuée du volume de stockage retenant les copeaux, s'écoulant naturellement jusqu'à la chambre 20 du système pneumatique 1 pour permettre son remplissage, au fur et à mesure de la collecte de l'huile par le bac. Lorsque le flotteur 6 du système atteint sa position haute, la chambre interne du boitier est automatiquement mise en pression, permettant l'évacuation automatique de l'huile, sans intervention humaine. De préférence, cette huile est évacuée vers le réservoir pour liquide de coupe de la machine d'usinage ayant généré les copeaux.

Le raccord est de préférence souple, configuré pour raccorder de manière amovible la vanne d'ouverture/fermeture 19 du bac de récupération de copeaux à la première entrée 21 du système pneumatique 1. Ce raccord peut comprendre par exemple une conduite souple et un raccord-rapide, permettant de coupler/découpler rapidement le système pneumatique 1 au bac de récupération 10. Il est ainsi possible de changer facilement le bac de récupération lorsque le bac est plein, ou encore lorsque la matière des copeaux vient à changer, et afin d'éviter les mélanges de matières.

Le système de séparation 16 peut comprendre une plaque amovible 17, partiellement grillagée, de la paroi de fond 15 du bac, ainsi qu'un plan incliné 18 pour l'huile ayant traversé la plaque grillagée (ou perforée), le plan incliné étant agencé en sur-profondeur de la paroi de fond 15 du bac. Les parois du fond 15 fixes, jouxtant la plaque amovible 17 présentent de préférence des inclinaisons assurant l'écoulement de liquide en direction de la portion grillagée (resp. la portion perforée) de la plaque amovible 17. Les orifices de la grille (resp. les perforations de la plaque) sont prévus pour retenir les copeaux tout en étant traversés par le liquide.

Le liquide ayant traversé la grille chute sur le plan incliné 18 en partie supérieure de celle-ci. Ce plan incliné 18 présente de préférence des chicanes saillantes 100, espacées (par exemple régulièrement) suivant la direction de la pente du plan incliné 18, et orientées de manière transversale à la pente. La fonction des chicanes est de retenir les particules métalliques des copeaux suffisamment petits pour traverser la grille. Le liquide s'écoule naturellement le long de la pente du plan incliné en direction de la vanne d'ouverture/fermeture 19 positionnée en contre bas.

Selon un mode de réalisation, le bac de récupération comprend une paire de fourreaux F1, F2, voire même deux paires de fourreaux F1, F2 ; F3, F4 sensiblement perpendiculaires. Les fourreaux de ladite ou chaque paire autorisent l'insertion des deux branches d'une fourche d'un engin de levage respectivement dans les deux fourreaux de la paire, permettant le levage et le retournement du bac.

Dans le cas de la présence de deux paires de fourreaux, sensiblement perpendiculaires entre elles, de préférence, les deux fourreaux de l'une des deux paires F1, F2 débouchent des deux côtés opposés du bac et les deux fourreaux de l'autre paire F3, F4 débouchent des deux autres côtés du bac : le bac de récupération est ainsi avantageusement manipulable par la fourche d'un engin de levage des quatre côtés du bac.

Le bac de récupération 10 peut encore présenter au niveau de son piètement un dégagement D1, voire de préférence deux dégagements repérés D1 et D2, permettant la manipulation et le levage du bac par insertion d'un transpalette au travers du dégagement D1 (ou D2) entre le bac de récupération 10 et son support tel que le sol. Le bac de récupération est ainsi avantageusement manipulable par un transpalette à partir d'au moins trois côtés du bac.

On remarque encore que la vanne d'ouverture/fermeture 19 peut être avantageusement logée dans une cavité 101 d'une paroi latérale 11 du bac. Cette vanne d'ouverture/fermeture est ainsi accessible par une ouverture de la paroi latérale 11 tout en étant protégée des éventuelles collisions lors des opérations de manipulation du bac de récupération.

Les bacs de récupération peuvent être avantageusement empilables. A cet effet, les quatre coins supérieurs du bac de récupération 10 peuvent comprendre respectivement quatre systèmes de cornières 102. Ces systèmes de cornières autorisent l'empilement en superposition d'un bac de récupération identique par appui des quatre coins inférieurs du bac supérieur, respectivement sur les quatre systèmes de cornières du bac de récupération inférieur. Chaque cornière peut comprendre un partie 103 reliant les parois intérieures de deux parois latérales successives du bac, cette partie 103 étant destinée à reprendre la charge verticale du bac supérieur, et une partie 104 en saillie du bord supérieur du bac venant en recouvrement verticalement avec le bac supérieur pour assurer le maintien latéral du bac.

Des anneaux 109 aux quatre coins du bac, notamment intégrés aux quatre systèmes de cornières peuvent permettre le levage du bac par élingage, par exemple en utilisant un pont roulant.

Le bac de récupération 10 peut encore présenter un ou plusieurs supports d'ardoise 110, 111. Le support d'ardoise est configuré pour permettre le support d'une ardoise (ou un au support d'écriture plan) servant à identifier la nature des copeaux stockés dans le bac. Le ou chaque support d'ardoise peut comprendre deux retours 110, 111, saillants de la paroi extérieure du bac. Les deux retours 110, 111, s'étendent parallèlement et horizontalement suivant leur longueur, et sont tournés l'un vers l'autre, configurés de manière à former une glissière permettant de retenir l'ardoise ou équivalent par les insertions simultanées des bords supérieur et inférieur de l'ardoise dans les deux rainures en vis-à-vis formées respectivement par les deux retours 110, 111, conjointement avec la paroi latérale.

L'équipement peut encore comprendre un couvercle destiné à fermer l'ouverture supérieure du bac de récupération en venant se clipser par la partie inférieure du couvercle sur la ceinture périphérique du bac, et tout en permettant l'empilage des bacs. Sa forme (la pente de sa paroi supérieure) permet l'évacuation des eaux de pluie lors des stockages en extérieur.

L'invention concerne encore l'utilisation de l'équipement conforme à l'invention pour la collecte des copeaux souillés d'huile d'usinage, dans le bac de récupération (de l'équipement), la séparation de l'huile, et l'évacuation de l'huile séparée par le bac de récupération par la mise en oeuvre de l'effet de chasse du système pneumatique de l'équipement déclenché automatiquement par la montée du flotteur du système pneumatique.

### NOMENCLATURE

1. Système pneumatique pour le relevage,
2. Boîtier,
   20. Chambre interne,
   21. Première entrée (boitier) pour le fluide à relever,
   22. Sortie pour le fluide relevé,
   23. Orifice d'évent,
   24. Deuxième entrée (boîtier) destinée à être connectée à une source d'air comprimée,
   25. Deuxième évent (paroi supérieure du boîtier),
3. Distributeur,
   30. Corps de valve (distributeur),
   31. Première entrée de valve connectée (air comprimé),
   32. Deuxième entrée de valve (mise à l'atmosphère extérieure),
   33. Sortie de valve,
   34. Levier de commande reliant le corps de valve au flotteur,
4. Conduite reliant la première entrée de valve à la troisième entrée du boîtier (air comprimé),
5. Conduite reliant la deuxième entrée de valve à la première entrée du boitier (évent),
6. Flotteur,
7. Valve anti-retour,
   70. Obturateur (valve),
8. Cloison de séparation,
   80. Surverse (bord supérieur de la cloison)
   81. Conduite de siphonage,
   82. Extrémité proximale,
   83. Extrémité distale,
   84. Point haut,
9. Soupape,
   90. Obturateur (soupape),
   91. Tige (soupape),
   92. Extrémité haute (tige),
   93. Extrémité basse (tige),
10. Bac de récupération de copeaux,
   11, 12, 13, 14. Paroi latérale du bac,
   15. Paroi de fond,

   16. Système de séparation copeaux/huile,
   17. Plaque grillagée (Système de séparation copeaux/huile),
   18. Plan incliné (Système de séparation copeaux/huile),

   19. Vanne d'ouverture/fermeture,
   100. Chicane saillante du plan incliné (Système de séparation copeaux/huile),
   101. Cavité de paroi (logement valve 19),
   102. Système de cornières,
   103. Partie du système de cornière destinée à reprendre la charge du bac en superposition,
   104. Partie saillante du bord supérieur destiné à assurer le maintien latéral du bac en superposition,
   109. Anneaux (pour élingage),
   110, 111. Retours saillants du support d'ardoise,

   Rp. Régulateur de pression,
   P1. Première position de la valve du distributeur (mise en communication de l'atmosphère interne avec l'atmosphère externe),
   P2. Deuxième position de la valve du distributeur (mise en pression avec la source d'air comprimé),

   C1. Premier compartiment,
   C2. Deuxième compartiment,
   D1, D2. Dégagements,
   F1, F2 ; F3, F4. Fourreaux (bacs de récupération).

## Revendications

1. Système pneumatique (1) pour le relevage d'un liquide tel que de l'huile, par exemple liquide de coupe ou lubrifiant d'usinage, comprenant :
- un boîtier (2) formant intérieurement au moins une chambre (20) pour la réception d'un liquide, présentant une première entrée (21) pour le liquide destiné à être relevé, une sortie (22) pour le liquide à évacuer, un orifice d'évent (23) apte à mettre en communication l'atmosphère interne du boîtier avec l'atmosphère extérieure, et une deuxième entrée (24) destinée à être connectée à une source d'air comprimé,
- une valve anti-retour (7) comprenant un obturateur (70) configuré pour autoriser le passage du fluide depuis la première entrée (21) vers la chambre (20), et interdisant la circulation de fluide en sens inverse,
- un distributeur (3), interne à la chambre du boîtier comprenant un corps (30) pour une valve pneumatique présentant :
- une première entrée (31) connectée par l'intermédiaire d'une première conduite (4) à la deuxième entrée (24) du boîtier destinée à être connectée à la source d'air comprimé et
- une deuxième entrée (32) connectée par l'intermédiaire d'une deuxième conduite (5) à l'orifice d'évent (23),
- une sortie (33),
un organe mobile de la valve du distributeur étant configurée pour prendre au moins :
- une première position (P1) dans laquelle la deuxième entrée (32) du distributeur (3) est mise en communication avec la sortie (33) du distributeur pour assurer la mise en communication de l'atmosphère de la chambre interne avec l'atmosphère externe au boîtier (2), la valve interdisant le passage de l'air comprimé depuis la première entrée (31) du distributeur vers la sortie (33) du distributeur,
- une deuxième position (P2) dans laquelle la première entrée (31) du distributeur est mise en communication avec la sortie (33) du distributeur pour assurer la mise en pression de la chambre interne avec la source d'air comprimé, la valve interdisant le passage de l'air depuis la sortie du distributeur vers la deuxième entrée (32) du distributeur,
ledit distributeur (3) comprenant un levier de commande (34), articulé à son extrémité proximale au corps (30) du distributeur et à son extrémité distale à un flotteur (6) apte à s'élever ou descendre suivant le niveau du fluide dans la chambre (20), ledit flotteur (6) passant successivement d'une position basse dans laquelle le levier de commande (34) actionne l'organe mobile de la valve dans la première position (P1) vers une position haute dans laquelle le levier de commande (34) actionne l'organe mobile de la valve dans la deuxième position (P2)
le système pneumatique étant configuré de manière à ce que l'écoulement de fluide traversant la première entrée (21) du boitier provoque le remplissage de la chambre (20) interne avec le liquide, l'air interne au boitier étant autorisé à s'échapper du boitier par l'évent (23) dans la position basse du flotteur pour laquelle la valve du distributeur est dans ladite première position (P1), puis la montée du flotteur provoque le passage de la valve du distributeur dans la deuxième position (P2) pour laquelle la chambre interne est mise en pression par la source d'air comprimé, provoquant le refoulement du fluide contenu dans la chambre par la sortie (22) du boîtier.

2. Système selon la revendication 1, dans lequel une cloison interne (8) divise la chambre (20) interne sur la partie inférieure au boitier (2) en :
- un premier compartiment (C1) dans lequel débouche la première entrée (21) et,
- un deuxième compartiment (C2) à l'intérieur duquel est disposé le flotteur (6), la sortie (22) pour le liquide à évacuer communiquant en partie basse du deuxième compartiment (C2), ledit flotteur (6) étant configuré pour suivre la montée ou la descente du niveau de liquide dans le deuxième compartiment (C2),
ledit système pneumatique étant configuré pour que le liquide s'écoulant depuis la première entrée (21) ayant traversé la valve anti-retour (7) soit acheminé dans le premier compartiment (C1), une surverse (80) de la cloison (8), ou alternativement une conduite de siphonage (81) traversant la cloison (8) étant configurée de manière à maintenir un niveau de liquide dans le premier compartiment (C1) supérieur au niveau de la valve anti-retour (7) en maintenant ladite valve anti-retour immergée, tout en permettant l'écoulement du liquide à partir du premier compartiment (C1) vers le deuxième compartiment (C2).

3. Système selon la revendication 2, dans lequel la conduite de siphonage (81) comprend une extrémité proximale (82) débouchant dans le premier compartiment (C1) au-dessous du niveau du bord supérieur de la cloison (8) et au-dessus de la valve anti-retour (7) et une extrémité distale (83) débouchant dans le deuxième compartiment (C2) au-dessous de l'extrémité proximale (82), ladite conduite de siphonage (81) étant configurée de manière à ce qu'une fois que le niveau du liquide dans le premier compartiment (C1) passe un point haut (84) de la conduite (81), ladite conduite de siphonage (81) provoque automatiquement l'aspiration du liquide contenu dans le premier compartiment (C1) entre l'extrémité proximale (82) et le point haut (84) et l'acheminement du liquide aspiré dans le deuxième compartiment (C2).

4. Système selon l'une des revendications 1 à 3, dans lequel le passage de la première position (P1) de l'organe mobile de la valve vers la deuxième position (P2) nécessitant une course du flotteur (6) et du levier de commande (34) associé intermédiaire entre la position basse du flotteur et la position haute du flotteur, course intermédiaire pour laquelle la valve interdit toute communication de fluide entre la première entrée (31) et la sortie (33) du distributeur, d'une part, et entre la deuxième entrée (32) et la sortie (33) du distributeur, d'autre part, et dans lequel l'orifice d'évent (23) étant dit premier évent, le boîtier du système présente un deuxième évent (25), indépendant, ainsi qu'un système de soupape (9), ledit système de soupape (9) comprenant un obturateur (90) telle qu'une membrane liée mécaniquement au flotteur (6) et configuré pour assurer la mise en communication de l'atmosphère de la chambre interne au boîtier (2) avec l'atmosphère externe au boîtier (2) sur la course intermédiaire du flotteur (6), et assurer la fermeture du deuxième évent (25) lorsque le flotteur (6) atteint ou dépasse la position haute du flotteur pour laquelle le levier de commande (34) actionne la valve du distributeur (3) dans la deuxième position (P2) assurant la mise en pression de la chambre interne avec la source d'air comprimé.

5. Equipement pour la récupération de copeaux d'usinage et la séparation de l'huile d'usinage comprenant :
- un bac de récupération de copeaux (10), amovible, comprenant quatre parois latérales (11,12,13,14) et une paroi de fond (15) définissant un volume de stockage des copeaux, définissant une ouverture supérieure de chargement/déchargement pour les copeaux, la paroi de fond (15) étant pourvu d'un système de séparation (16) perméable à l'huile, et destinée à retenir les copeaux, suivi d'une vanne d'ouverture/fermeture (19),
- un système pneumatique (1) pour le relevage d'un liquide selon l'une des revendications 1 à 4 dont la première entrée (21) pour le liquide est destinée à être raccordée à la vanne d'ouverture/fermeture du bac de récupération,
- un raccord souple configuré pour raccorder de manière amovible la vanne d'ouverture/fermeture du bac de récupération de copeaux à la première entrée (21) du système pneumatique (1).

6. Equipement selon la revendication 5 dans lequel le système de séparation (16) comprend une plaque amovible (17), partiellement grillagée de la paroi de fond (15), ainsi qu'un plan incliné (18) pour l'huile ayant traversé la plaque grillagée en sur-profondeur de la paroi de fond (15), présentant des chicanes saillantes (100) du plan incliné, espacées suivant la direction de la pente du plan incliné de manière transversale à la pente.

7. Equipement selon la revendication 5 ou 6, dans lequel le bac de récupération comprend une paire de fourreaux, ou deux paires de fourreaux sensiblement perpendiculaires, autorisant chacune l'insertion des deux branches d'une fourche d'un engin de levage respectivement dans les deux fourreaux de la paire, permettant le levage et le retournement du bac.

8. Equipement selon l'une des revendications 5 à 7 dans lequel la vanne d'ouverture/fermeture (19) est logée dans une cavité (101) d'une paroi latérale (11) du bac.

9. Equipement selon l'une des revendications 5 à 8 dans lequel les quatre coins supérieurs du bac de récupération (10) comprennent quatre systèmes de cornières (102) autorisant l'empilement en superposition d'un bac de récupération identique par appui des quatre coins inférieurs du bac sur les quatre systèmes de cornières du bac de récupération (10).

10. Utilisation de l'équipement selon l'une des revendications 5 à 9 pour la collecte des copeaux souillés d'huile d'usinage ou autre liquide de coupe, dans le bac de récupération (10) de l'équipement, la séparation de l'huile, et l'évacuation de l'huile séparée par le bac de récupération par la mise en oeuvre de l'effet de chasse du système pneumatique (1) de l'équipement déclenché automatiquement par la montée du flotteur du système.
